# EUROPEAN PATENT APPLICATION

(11) **EP 4 411 466 A1**
(43) Date of publication of application: **07.08.2024**
(21) Application number: 24155439.3
(22) Date of filing: 02.02.2024
(51) Int. Cl.: G02F 1/13357

(54) **LIGHT CONTROL FILM**

(30) Priority: 03.02.2023 KR 20230015094
(71) Applicant: LMS Co., Ltd., Pyeongtaek-si Gyeonggi-do 17709 (KR)
(72) Inventor: Ham, Moonho, Gyeonggi-do 17709 (KR); Cho, Janghee, Gyeonggi-do 17709 (KR); Lee, Woojong, Gyeonggi-do 17709 (KR); Lee, Jongmun, Gyeonggi-do 17709 (KR); Lee, Wonhee, Gyeonggi-do 17709 (KR)
(74) Representative: Gulde & Partner

(57) **Abstract**

The light control laminated film according to various embodiments of the present invention may include a louver film including a plurality of light absorption patterns arranged in parallel and a light transmitting portion surrounding at least a portion of the plurality of light absorption patterns, a reflective polarizing film configured to adjust the angle of light transmitted to the louver film for polarization recycling, and a first adhesive layer disposed between the louver film and the reflective polarizing film.

## Description

### [Technical Field]

Various embodiments of the present specification relate to a light control film, a backlight unit including the light control film, and a display device including the light control film.

### [Background Art]

Various of light control films are developed for the purpose of preventing the content displayed on the display from being seen to others. For example, as the automotive display market grows, the use of automotive displays is increasing, and for the safety of drivers and passengers, optical devices that can control the viewing angle are used to prevent the drivers from seeing the image displayed on the display while driving. Thus, various light control films are developed.

Typically, the light control film has the purpose of protecting privacy and/or limiting viewing angles, and thus, it may include a louver film. Additionally, the light control film may include a film configured to vary light transmittance depending on the angle. Accordingly, a light control film that can improve viewing angle and brightness is required.

### [Detailed Description of the Invention]

### [Technical Problem]

To reduce the viewing angle of the light control film, a plurality of optical sheets(e.g., two optical sheets) may be stacked. However, when an optical film including a plurality of stacked optical sheets is used, the thickness of the optical film may be increased, and the brightness may be decreased due to a decrease in transmittance due to the absorption layer of the optical film. Additionally, battery power consumption may be increased to compensate for the lowered brightness. Additionally, the assembling time of the backlight module can be increased by stacking the plurality of optical sheets. The present invention can provide a light control film with high transparency using an optical film with improved light recycling of a reflective polarizing film and improved total reflection of a louver film. The present invention can provide a light control film that adjusts the viewing angle and improves brightness by using an asymmetrically formed light-shielding pattern of a louver film.

### [Technical Solution]

According to an embodiment of the invention, there is provided that a light control film comprises a louver film including a plurality of light absorption patterns arranged in parallel and a light transmitting portion surrounding at least a portion of the plurality of light absorption patterns; a reflective polarizing film adjusting an angle of a light transmitted to the louver film; and a first adhesive layer disposed between the louver film and the reflective polarizing film. An difference between a first refractive index of the light transmitting portion and a second refractive index of the plurality of light absorption patterns is 0.05 or more. The plurality of light absorption patterns include a first side and a second side formed asymmetrically with each other.

In an embodiment, the first side is inclined by a first angle with respect to the reflective polarizing film and the second side is substantially perpendicular to the reflective polarizing film for the light control film in the present invention.

In an embodiment, the first angle is 3.5° to 5° for the light control film in the present invention.

In an embodiment, the reflective polarizing film is configured to transmit the light in a specified angle range and reflect the light exceeding the specified angle for the light control film in the present invention.

In an embodiment, the plurality of light absorption patterns are arranged along a first direction and the reflective polarizing film includes a transmission axis formed along the first direction for the light control film in the present invention.

In an embodiment, the light control film further comprises a first base film disposed on the louver film; and a matte layer including a plurality of protrusions disposed on the first base film in the present invention.

In an embodiment, at least some of the plurality of protrusions are formed in an irregular shape with a curved surface for the light control film in the present invention.

In an embodiment, the plurality of light absorption patterns include a lower surface facing the first adhesive layer and an upper surface facing opposite to the lower surface and being spaced apart from the first base film for the light control film in the present invention.

In an embodiment, the light control film further comprises a second base film disposed below a second adhesive layer. The second adhesive layer is disposed between the reflective polarizing film and the second base film in the present invention.

In an embodiment, the light control film further comprises a coating layer disposed below the second base film in the present invention.

In an embodiment, a third refractive index of the reflective polarizing film is different from a fourth refractive index of the first adhesive layer for the light control film in the present invention.

In an embodiment, the first adhesive layer is attached to the lower surface of the plurality of light absorption patterns and a back surface of the transmission layer for the light control film in the present invention.

According to another embodiment of the invention, there is provided that a display device comprises a liquid crystal panel; and a back light unit. The backlight unit comprises a light source; a light control film comprising a louver film including a plurality of light absorption patterns arranged in parallel and a light transmitting portion surrounding at least a portion of the plurality of light absorption patterns; a reflective polarizing film adjusting an angle of a light transmitted to the louver film; and a first adhesive layer disposed between the louver film and the reflective polarizing film wherein a difference between a first refractive index of the light transmitting portion and a second refractive index of the plurality of light absorption patterns is 0.05 or more, The plurality of light absorption patterns include a first side and a second side formed asymmetrically with each other; and a light guide plate for transmitting a light incident from the light source to the light control film.

### [Advantageous Effects]

The present invention, the light control film with improved light transmittance shall be provided by using the reflective polarizing film configured to improve total reflection of the louver film. By improving the transmittance of the optical film, energy efficiency can be increased, and the brightness of the display device can be improved. Moreover, the light control film shall adjust the screen to an angle required by the user. For example, the display device including the light control film of the present invention shall be mounted on a vehicle display and adjust the viewing angle to suit the driver and passenger's viewing area. Consequently, the user's privacy function may be strengthened.

### [Brief Description of Drawings]

FIG. 1 is a schematic illustrating a display device according to an embodiment of the present invention.
FIG. 2 is a cross-sectional view of a light control film according to an embodiment of the present invention.
FIG. 3 is a cross-sectional perspective view of a backlight unit including a light control film according to an embodiment of the present invention.
FIG. 4 is a cross-sectional view showing the cut-off viewing angle for the refractive index of the light-shielding pattern layer and the adhesive layer according to an embodiment of the present invention.
FIG. 5 is a table comparing the characteristics of a display device including a light control film including a louver film and a reflective polarizing film, according to an embodiment of the present invention, with the characteristics of a conventional display.

### [Mode for Carrying out the Invention]

Various embodiments and terms used in the specification are not intended to limit the technical features described in the specification to specific embodiments, but it should be understood to include various modifications, equivalents, or substitutions of the embodiments. In connection with the description of the drawings, similar reference numerals may be used for similar or related components. The singular form of the noun corresponding to the item may include one or more of the elements unless the relevant context clearly dictates otherwise.

According to various embodiments, each component (e.g., module or program) of the above-described components may include a single or plural entity, and some of the plurality of entities may be separately placed in other components. According to various embodiments, one or more of the components or operations described above may be omitted, or one or more other components or operations may be added. Multiple components (e.g., modules or programs) may be alternatively or additionally integrated into a single component. In this case, the integrated component may perform one or more functions of each component of the plurality of components in the same or similar manner as those performed by the corresponding component of the plurality of components prior to the integration. According to various embodiments, operations performed by a module, program, or other component may be executed sequentially, in parallel, iteratively, or heuristically, or one or more of the operations may be executed in a different order or omitted. Alternatively, one or more other operations may be added.

Embodiments will be described with reference to the associating drawings. In describing the present embodiment, the same names and the same reference numerals are used for the same components, and an additional description thereof will be omitted. In addition, in describing the embodiment of the present invention, the same names and reference numerals are used for components having the same functions, and it is substantially not completely the same as in the prior art.

According to various embodiments, terms such as "comprise" or "have" are intended to designate the presence of a feature, number, step, operation, component, part, or combination described in the specification. It should be understood, however, that the above does not preclude the possibility of addition or existence of one or more of other features, or numbers, steps, operations, components, parts, or combinations.

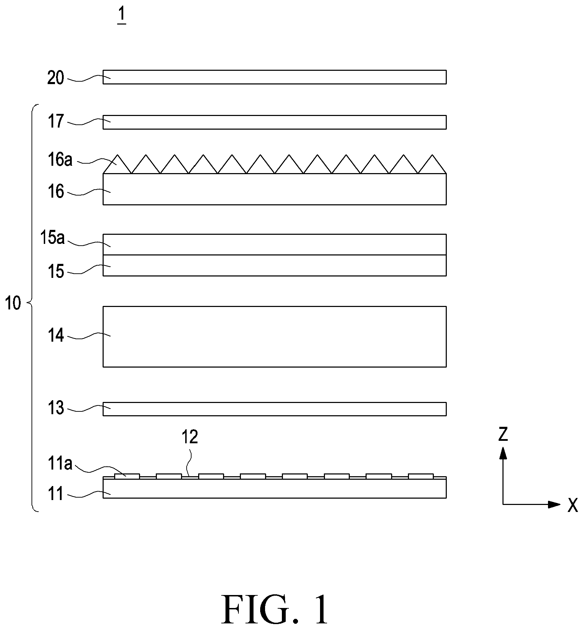

FIG. 1 is a schematic illustrating a display device according to an embodiment of the present disclosure.

Referring to FIG. 1, a display device (or liquid crystal display device) 1 according to an embodiment of the present invention includes a backlight unit 10 and a liquid crystal panel 20. The backlight unit 10 may include a substrate 11 including a light source, a color conversion sheet 13, prism sheets 15 and 16, and a diffusion sheet 14 and 17. According to an embodiment, a reflective sheet 12 may be disposed on one side of the light source 11a. According to an embodiment, at least one of the components of FIG. 1 (e.g., diffusion sheet 17) may be omitted, or one or more other components (e.g., reflective polarizing sheet (not shown )) can be added for the backlight unit 10.

According to an embodiment, the light source 11a is configured to emit light to the back of the liquid crystal panel 20 and may be disposed on one side of the substrate 11. The light source 11a may be a light emitting diode (LED, referred to as LED). The light source 11a may include, for example, a plurality of LED chips that emit light. Depending on the size of the LED chip, LEDs are classified into large LED (chip size: 1,000 ,urn or more), middle LED (chip size: 300 - 500 µm), and small LED (chip size: 200 µm). - 300 µm), mini LED (chip size: 100 - 200 µm), and micro LED (chip size: 100 µm or less). Here, the LED may include materials such as InGaN and GaN. Light emitted from the light source 11a may be emitted toward the liquid crystal panel 20 (+Z-direction). Light emitted from the light source 11a may pass through the color conversion sheet 13 and enter the diffusion sheet 14.

According to an embodiment, a reflective sheet 12 may be positioned on the surface of the substrate 11. The reflective sheet 12 may include material such as BaSO₄, TiO₂, CaCO₃, SiO₂, Ca₃(SO₄)₂, or may include material such as Ag. It may be deposited or coated on a substrate 11 positioned between the light source 11a and the light source 11a. The reflective sheet 12 allows light emitted from the light source 11a to pass through the color conversion sheet 13, the diffusion sheets 14 and 17, and prism sheets 15 and 16. Then, it reflects the reflected light which was reflected to the substrate 11 following the interface reflection back in the direction in which the light is diverged. Through this, loss of light can be minimized. In other words, the reflective sheet 12 can perform light recycling.

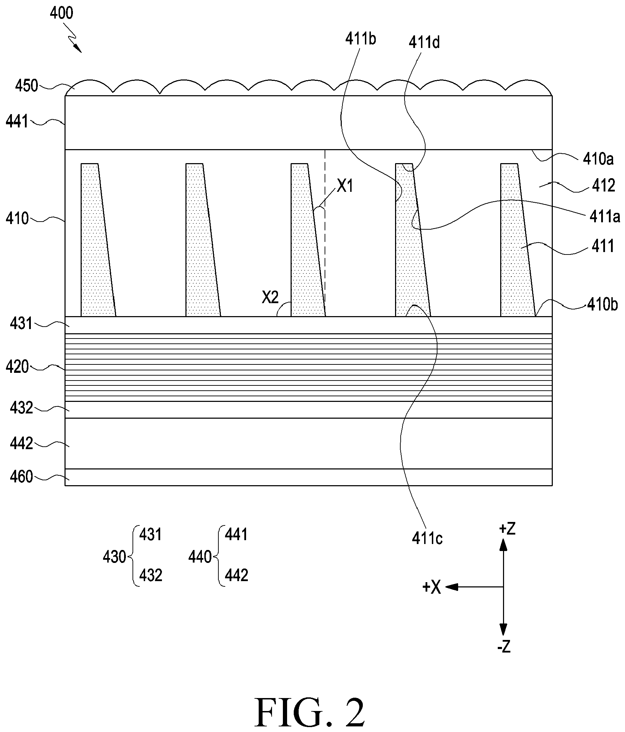

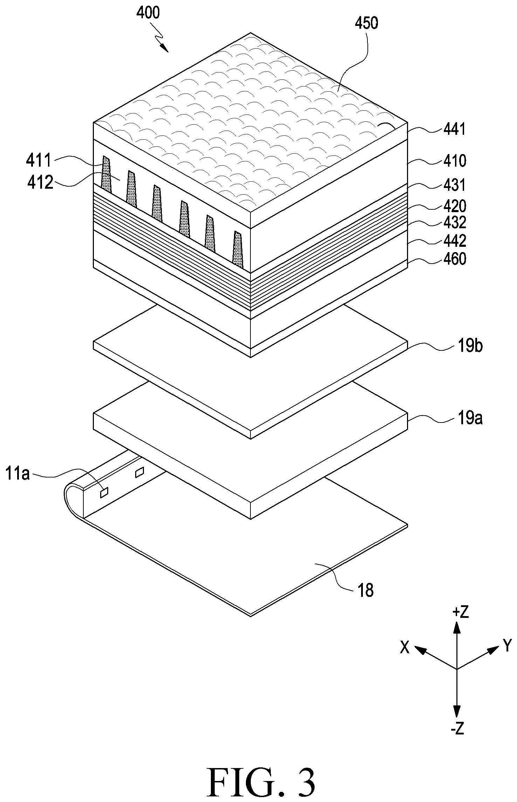

Although the light source 11a located on the substrate 11 is shown in FIG. 1, the structure of the backlight unit 10 of the present invention is not limited to. For example, the light control film of the present invention (e.g., a light control film 400 of FIG. 2) may also be applied to a backlight unit (e.g., FIG. 3) using a light guide plate (e.g., a light guide plate 19a of FIG. 3). For the backlight unit including the light guide plate 19a, the light source 11a is located on the side of the light guide plate 19a, and the light guide plate 19a can convert the light incident from the light source 11a into the form of a surface light source.

According to an embodiment, the color conversion sheet 13 can convert the color of light emitted from the light source 11a. For example, the light from a mini-LED or micro-LED may be blue light (450 nm). In this case, blue light needs to be converted to white light. The color conversion sheet 13 can transmit the blue light emitted from the light source 11a and simultaneously convert the blue light into white light.

According to an embodiment, the diffusion sheets 14 and 17 may uniformly disperse light incident from the color conversion sheet 13. The diffusion sheets 14 and 17 can cause diffusion of light by light diffuser beads and a curable resin solution (e.g., at least one of urethane acrylate, epoxy acrylate, ester acrylate, and radical generating monomer selected alone or mixed) to which the light diffuser beads are added. Additionally, the diffusion sheets 14, 17 may promote the diffusion of light by having uniform or non-uniform size of shape (for example, a sphere) of a protrusion pattern (or protrusions).

According to an embodiment, the diffusion sheets 14 and 17 may include a lower diffusion sheet 14 and an upper diffusion sheet 17. The lower diffusion sheet 14 may be disposed between the color conversion sheet 13 and the prism sheet 15. The upper diffusion sheet 17 may be disposed between the prism sheet 16 and the liquid crystal panel 20. If the backlight unit 10 further includes a reflective polarizing sheet, the upper diffusion sheet 17 may be disposed between the prism sheet 16 and the reflective polarizing sheet.

According to an embodiment, the prism sheets 15 and 16 can collect incident light using an optical pattern formed on the surface and then emit it to the liquid crystal panel 20. The prism sheets 15 and 16 may include a light-transmitting base portion and a prism pattern layer formed on an upper surface (a surface facing the +Z-direction) of the base portion. The prism pattern layer may be formed as an optical pattern layer in the form of a triangular array with an inclined plane at a specified angle (for example, an inclined plane of 45°) to improve brightness in a direction parallel to the plane(e.g., X-Y plane). The prism patterns of the prism pattern layer may be in the shape of a triangular pillar and may be arranged so that one side of the triangular pillar faces the base portion.

According to an embodiment, the prism sheets 15 and 16 may include a first prism sheet 15 and a second prism sheet 16. According to an embodiment, the first prism sheet 15 and the second prism sheet 16 may be formed as a laminated prism sheet structure. The second prism sheet 16 may be disposed to overlap the upper surface of the first prism sheet 15. For the first prism sheet 15, a plurality of first prism patterns may be arranged side by side with each other. Each first prism pattern may have a structure extending in one direction. For example, the vertex lines 15a of each of the first prism pattern may be formed to extend toward the +X-direction. Similarly, for the second prism sheet 16, a plurality of second prism patterns may also be arranged side by side with each other. Each second prism pattern may have a structure extending in one direction. For example, the vertex lines 16a of each of the second prism pattern may be formed to extend in a direction perpendicular (referred to as the 'Y-direction') to the X-direction and Z-direction. Here, the extension direction of the first prism pattern and the extension direction of the second prism pattern are shown as facing the X-direction and Y-direction for the convenience of explanation. However, it is not limited to the illustrated embodiment, and may be oriented in a direction other than the X-direction or Y-direction.

According to an embodiment, a reflective polarizing sheet (not shown) is provided on the prism sheets 15, 16 and the upper diffusion sheet 17 to collect light from the prism sheets 15, 16 and diffused by the upper diffusion sheet. It can transmit some polarized light and reflect other polarized light downward.

According to an embodiment, the liquid crystal panel 20 may refract light emitted from the light source 11a into a predetermined pattern according to an electrical signal. The refracted light may pass through a color filter and a polarizing filter disposed on the front of the liquid crystal panel 20 to construct an image on a screen.

FIG. 2 is a cross-sectional view of a light control film according to an embodiment of the present invention. FIG. 3 shows a cross-sectional perspective view of the backlight unit comprising a light control film according to an embodiment of the present invention.

Referring to FIGs. 2 and/or 3, the light control film 400 may include a louver film 410, a reflective polarizing film 420, an adhesive layer 430, a base film 440, a matte layer 450, and/or a coating layer 460. According to an embodiment, the configuration of the light source 11a and the diffusion sheet 19b in FIG. 3 may be replaced in whole or in part as the configuration of the light source 11a and the diffusion sheet 14 in FIG. 1.

According to an embodiment, Referring to FIG. 3 the light source 11a may emit light from a side (e.g., Y-direction) of the light guide plate 19a and transmit light to the light guide plate 19a. An identifiable image can be implemented by irradiating the light emitted from the light source 11a onto the back of the liquid crystal panel. According to an embodiment, the light source 11a may include one of a cold cathode fluorescent lamp (CCFL), an external electrode fluorescent lamp, and a light emitting diode (LED).

According to an embodiment, the reflector 18 may be disposed behind the light guide plate 19a (e.g., -Z-direction) to reduce light loss by reflecting the light emitted behind the light guide plate 19a and making it incident on the light guide plate 19a. According to an embodiment, the light guide plate 19a can convert light incident from the light source 11a into the form of a surface light source.

According to an embodiment, the diffusion sheet 19b can uniformly disperse the light incident from the light guide plate 19a. As an example, the diffusion sheet 19b. The diffusion sheets 19b on which a curable resin solution (e.g., at least one of urethane acrylate, epoxy acrylate, ester acrylate, and radical generating monomer selected alone or mixed) including the light diffuser beads was coated can cause diffusion of light by light diffuser beads. As another example, the diffusion sheet 19b may be formed with a protrusion pattern (or protrusions) of a uniform or non-uniform size (for example, a sphere) to promote the diffusion of light.

According to an embodiment, the light control film 400 is disposed on the upper part (e.g., +Z-direction) of the diffusion sheet 19b and can condense the light transmitted from the diffusion sheet 19b and move it upward.

According to an embodiment, the light control film 400 may be positioned above a diffusion sheet (+Z-direction) (e.g., a lower diffusion sheet 14 in FIG. 1). The light control film 400 can focus the light transmitted from the diffusion sheet 14 and move it upward. As an example, the light control film 400 includes a louver film 410 for concentrating light and can completely reflect the light transmitted from the diffusion sheet 14 internally and refract it upward. According to an embodiment, the light control film 400 may be referred to as an optical film.

According to an embodiment, the light control film 400 may concentrate at least a portion of the light generated from the light source 11a. For example, the light control film 400 may reduce and/or limit the viewing angle of the display device 1 by concentrating light directed in the left and right directions (e.g., X direction) in the center direction (e.g., +Z-direction). According to an embodiment, the light control film 400 may be referred to as an optical film.

According to an embodiment, the louver film 410 may include a plurality of light absorption patterns 411. According to an embodiment, the light absorption pattern 411 may have material capable of absorbing at least a portion of light. For example, the light absorption pattern 411 may include at least one material that can absorb light, such as carbon nanotubes (CNTs), graphene, or carbon black. According to an embodiment, the louver film may be referred to as a microlouver film or a light-shielding pattern layer. According to an embodiment, the louver film 410 may include a light transmitting portion 412 disposed among the plurality of light absorption patterns 411. The light absorption pattern 411 and the light transmitting portion 412 may be substantially alternately arranged along the left and right directions (e.g., X-direction). According to an embodiment, the light absorption pattern 411 may be referred to as a first pattern or a reflection pattern. The light transmitting portion 412 may be referred to as a light transmitting area or a transmission layer and may be distinguished from the base film 440 which is another component that transmits light.

According to an embodiment, the louver film 410 may be disposed between the first base film 441 and the first adhesive layer 431. For example, the louver film 410 has a first surface 410a (e.g., top surface) facing the first base film 441. It may also include a second surface 410b (e.g., a bottom surface) opposite to the first surface 410a and facing the reflective polarizing film 420.

According to an embodiment, the plurality of light absorption patterns 411 may be designed to have a shape side by side that corresponds to each other. For example, one light absorption pattern 411 may extend along a first direction (e.g., Y-direction). The plurality of light absorption patterns 411 may be arranged to be spaced apart along the left and right directions(hereinafter 'second direction') (e.g., X-direction). A structure that the light absorption pattern 411 extends along the first direction may be referred to as a structure that one light absorption pattern 411 is arranged substantially parallel to the first direction.

According to an embodiment, the light absorption pattern 411 may be disposed on the second surface 410b of the louver film 410. For example, the light absorption pattern 411 has an upper surface 411d facing the first surface 410a, a lower surface 411c disposed on the second surface 410b, and an upper surface 411d extending from the lower surface 411c to the upper surface 411d. The lower surface 411c may be disposed on a first plane(parallel to the X-Y plane) with the second surface 410b. It may include sides 411a, 411b. According to an embodiment, the sides 411a, 411b may include a first side 411a and a second side 411b.

According to an embodiment, the light absorption pattern 411 may be formed asymmetrically. For example, the inclined angles of the first side 411a and the second side 411b may be different. According to an embodiment, the first side 411a may be inclined at a first angle (X1) with respect to the reflective polarizing film 420 and/or the second surface 410b. The second side 411b may be inclined at a second angle (X2) that is different from the first angle (X1) with respect to the reflective polarizing film 420 and/or the second surface 410b. For example, the first angle (X1) formed by the first side 411a with the normal line of the reflective polarizing film 420 and/or the normal line of the second surface 410b may be 3.5° to 5°. For example, the second angle (X2) formed by the second side 411b with the normal line of the reflective polarizing film 420 and/or the normal line of the second surface 410b may be 0°. In other words, the second side 411b may be substantially perpendicular to the reflective polarizing film 420 and/or the second surface 410b according to an embodiment. As the light absorption pattern 411 is formed asymmetrically, the path of light passing through the louver film 410 may be changed. For example, the angle of the screen output (e.g., viewing angle) from the display device (e.g., display device 1 of FIG. 1) including the light control film 400 may be changed. As the light absorption pattern 411 is formed asymmetrically, the intensity of light totally reflected in the louver film 410 is increased, and the brightness of the display device including the light control film 400 (e.g., display device 1 in FIG. 1) can be increased.

According to an embodiment, the light absorption pattern 411 may have a substantially asymmetric trapezoidal shape, for example, a wedge shape. According to an embodiment, the cross-sectional area of the light absorption pattern 411 in the second direction (e.g., X-direction) may have a shape that becomes smaller as it goes toward a third direction(e.g., +Z-direction). For example, the area of the lower surface 411c of the light absorption pattern 411 may be larger than the area of the upper surface 411d. As the area of the lower surface 411c of the light absorption pattern 411 is larger than the area of the upper surface 411d, moiré effect and light interference can be reduced.

According to an embodiment, the upper surface 411d of the light absorption pattern 411 may be spaced apart from the first surface 410a of the louver film 410. As the light absorption pattern 411 is spaced apart from the first surface 410a of the louver film 410, the cut-off viewing angle brightness can be controlled. Thus, an improved light control film 400 can be provided. According to an embodiment, the distance between the upper surface 411d of the light absorption pattern 411 and the first surface 410a of the louver film 410 can be designed to consider the amount of bubbles generated during the manufacturing process of the light control film 400 and the consumption of UV resin.

According to an embodiment, the plurality of light absorption patterns 411 may change the viewing angle of the light incident on the plurality of light absorption patterns 411. For example the direction of the light incident on the plurality of light absorption patterns 411 can be changed. For example, the louver film 410 may concentrate at least a portion of the light incident from below (e.g., -Z-direction) to above (e.g., +Z-direction) the louver film 410, or may change the path of light using the light absorption patterns 411. In the present specification, focusing of light can be interpreted as condensing.

According to an embodiment, the louver film 410 may have a refractive index to improve total reflection. For example, the second refractive index of the light absorption pattern 411 may be different from the first refractive index of the light transmission area 412. According to an embodiment, the difference in the first refractive index and light absorption of the light transmitting area 412 with respect to the second refractive index of the pattern 411 may be 0.05 or more. The transmission axis of the louver film 410 may be arranged parallel to the width direction or horizontal direction (parallel to the first plane or X-Y plane) of the light control film 400.

According to an embodiment, the brightness of the backlight unit 10 and/or the display device 1 may be increased by using polarization recycling. For example, the reflective polarizing film 420 may pass some of the light generated by the light source 11a and reflect the others. According to an embodiment, the reflective polarizing film 420 may have a structure where a plurality of layers with different refractive indices are alternately arranged. For example, the reflective polarizing film 420 may be an assembly of a stack of a high refractive index layer and a low refractive index layer. According to an embodiment, the reflective polarizing film 420 may be referred to as a reflective polarizing sheet.

According to an embodiment, the reflective polarizing film 420 can adjust the angle of light transmitted to the louver film 410. For example, at least a portion of the light generated from the light source 11a may be refracted while passing through the reflective polarizing film 420 and/or the first adhesive layer 431. The reflective polarizing film 420 may refract light at an angle to increase the intensity and/or amount of light incident on the light path for total reflection of the louver film 410.

According to an embodiment, the reflective polarizing film 420 may transmit light within a specified angle range and reflect at least a portion of the light exceeding the specified angle. Light in the specified angle range may be referred to as an angle range that induces total reflection of the louver film 410. As the reflective polarizing film 420 transmits light in a designated angle range, the total reflection efficiency in the louver film 410 can be increased. The specified angle range is determined by the design of the light control film 400 (e.g., the thickness of the reflective polarizing film 420, material of the reflective polarizing film 420, the thickness of the first adhesive layer 431, material of the first adhesive layer 431 and/or the configuration of the louver film 410 (e.g., pitch of light absorption pattern 411, material of light transmission area 412)).

According to an embodiment, the reflective polarizing film 420 may include a transmission axis arranged parallel to the width direction or the horizontal direction (e.g., X-Y plane) of the light control film 400. Light passing through the reflective polarizing film 420 may be transmitted to the louver film 410. According to an embodiment, the transmission axis of the reflective polarizing film 420 may be arranged substantially parallel to the polarizing film of the display device 1. For example, the reflective polarizing film 420 may include a transmission axis formed along the first direction (e.g., Y-direction).

According to an embodiment, the transmission axis of the components of the light control film 400 may be substantially parallel. For example, the light absorption pattern 411, the light transmission area 412, and the reflective polarizing film 420 may extend along a horizontal transmission axis (e.g., Y-direction). According to an embodiment, the transmission axis of the liquid crystal panel 20 may also be arranged substantially parallel to the transmission axis of the light control film 400. According to an embodiment, the plurality of light sources 11a may be arranged along the transmission axis (e.g., Y-direction). For example, the plurality of light sources 11a may emit light in a direction perpendicular to the transmission axis.

According to an embodiment, the reflective polarizing film 420 may be located below the louver film 410 (-Z-direction). For example, the reflective polarizing film 420 may be positioned between the first adhesive layer 431 and the second adhesive layer 432.

According to an embodiment, the adhesive layer 430 may be attached to at least some of the components of light control film 400. According to an embodiment, the adhesive layer 430 may include a first adhesive layer 431 disposed between the louver film 410 and the reflective polarizing film 420 and a second adhesive layer 432 disposed between the reflective polarizing film 420 and a second base film 442. According to an embodiment, the first adhesive layer 431 may reduce the air gap between the louver film 410 and the reflective polarizing film 420 thereby reducing light loss due to interfacial reflection. The second adhesive layer 432 may reduce an air gap between the reflective polarizing film 420 and the second base film 442 thereby reducing light loss due to interfacial reflection. According to an embodiment, the adhesive layer 430 may be referred to as an adhesive. According to an embodiment, the louver film 410 and the reflective polarizing film 420 may have a structure where they are laminated by using the adhesive layer (e.g., the first adhesive layer 431).

According to an embodiment, the base film 440 may support at least some of the components of the light control film 400. According to an embodiment, the base film 440 may include a first base film 441 supporting the matte layer 450 and the second base film 442 supporting the second adhesive layer 432. According to an embodiment, the first base film 441 may be disposed between the matte layer 450 and the louver film 410. According to an embodiment, the second base film 442 may be disposed between the second adhesive layer 432 and the coating layer 460. The second base film 442 may be positioned between the reflective polarizing film 420 and the coating layer 460.

According to an embodiment, the base film 440 (e.g., the first base film 441 and the second base film 442) may be formed of material that can transmit at least a portion of visible light. According to an embodiment, the base film 440 may include at least one of polymer resins such as polycarbonate (PC), acrylate, and polyethylene terephthalate (PET). According to an embodiment, the first base film 441 may be referred to as a first light transmitting layer. The second base film 442 may be referred to as a second light transmitting layer.

According to an embodiment, the matte layer 450 may be provided to reduce moiré visibility. For example, the matte layer 450 may include a plurality of protrusions facing the third direction (+Z-direction) to form a narrow viewing angle. According to an embodiment, the matte layer 450 may be disposed on the first base film 441. According to an embodiment, the plurality of protrusions of the matte layer 450 may enhance external shielding of the light control film 400 and reduce moiré visibility.

According to an embodiment, the matte layer 450 can implement a scattering effect with non-bead type surface irregularities. For example, the matte layer 450 can be implemented by designing a plurality of uneven shapes on the surface to form the matte layer through a mold process and then replicating the uneven shapes using UV resin. According to an embodiment, the matte layer 450 may be formed in an irregular shape, at least a portion of which has a curved surface.

According to an embodiment, the coating layer 460 may be deposited underneath the second base film 442. The coating layer 460 may protect a portion of the light control film 400 (e.g., the second base film 442) from external impact. The coating layer 460 may be referred to as a hard coating layer.

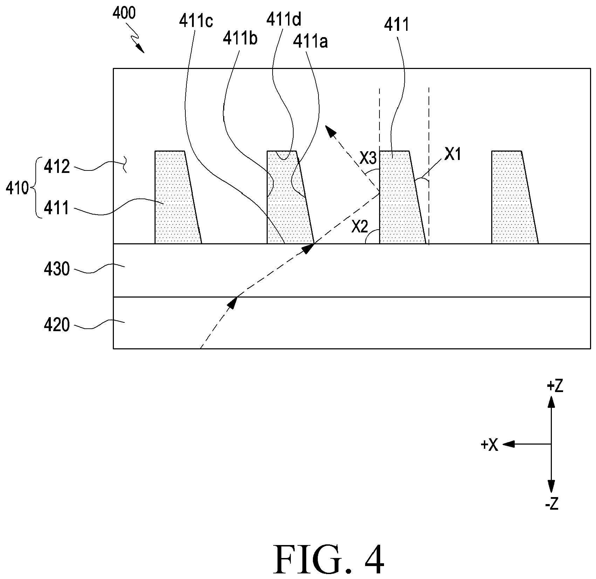

FIG. 4 is a cross-sectional view showing the cut-off viewing angle for the refractive index of the light-shielding pattern layer and the adhesive layer according to an embodiment of the present invention. Referring to FIG. 4, the light control film 400 may include a louver film 410, a reflective polarizing film 420, and an adhesive layer 430. The configuration of the light control film 400, the louver film 410, the reflective polarizing film 420, and the adhesive layer 430 of FIG. 4 may be the same as the configuration of the light control film 400, the louver film 410, the reflective polarizing film 420, and the first adhesive layer 431 of FIG. 2 and/or FIG. 3 in whole or in part. For example, the louver film 410 may include a first side 411a inclined at a first angle (X1) with respect to the reflective polarizing film 420 and/or the adhesive layer 430, a second side 411b that is substantially perpendicular to the reflective polarizing film 420 and/or the adhesive layer 430, and a lower surface 411c disposed on the adhesive layer 430 and an upper surface 411d opposite to the lower surface 411c.

According to an embodiment, the louver film 410 may receive light passing through the reflective polarizing film 420 and the adhesive layer 430. The adhesive layer 430 may be disposed beneath the louver film 410. The reflective polarizing film 420 may be disposed below the adhesive layer 430.

According to an embodiment, each of a second refractive index of the light absorption pattern 411, a first refractive index of the light transmitting portion 412, a third refractive index of the reflective polarizing film 420, and a fourth refractive index of the adhesive layer 430 may be different. As the refractive indices of the light transmitting portion 412, the reflective polarizing film 420, and the adhesive layer 430 are different, the refraction angle of light that is determined based on the thickness of the reflective polarizing film 420 and/or the thickness of the adhesive layer 430 may be changed.

According to an embodiment, light passing through the louver film 410 may be changed based on the thickness of the reflective polarizing film 420. When the thickness of the reflective polarizing film 420 is increased, the path of light passing through the reflective polarizing film 420 is extended, and the refraction angle of light passing through the light-transmitting portion 412 of the louver film 410 may be changed. For example, light passing through the light transmitting portion 412 may be reflected at a third angle (X3) from the second side 411b of the light absorption pattern 411. The third angle (X3) may be referred to an angle that a screen output from a display device (e.g., display device 1 in FIG. 1) is tilted or moved. When the refraction angle of the light is increased, the brightness of the cut-off viewing angle may be increased along with the cut-off viewing angle increased.

According to an embodiment, based on the thickness of the adhesive layer 430, the refraction angle of light passing through the louver film 410 may be changed. For example, as the thickness of the adhesive layer 430 is increased, the cut-off viewing angle may be increased. When the thickness of the adhesive layer 430 is increased, the path of light passing through the adhesive layer 430 is extended, and the refraction angle of light passing through the light transmitting portion 412 of the louver film 410 may be changed. When the refraction angle of the light is increased, the brightness of the cut-off viewing angle may be increased along with the cut-off viewing angle increased. According to an embodiment, the adhesive layer 430 is disposed between the louver film 410 and the reflective polarizing film 420 and may support the plurality of light absorption patterns 411 of the louver film 410.

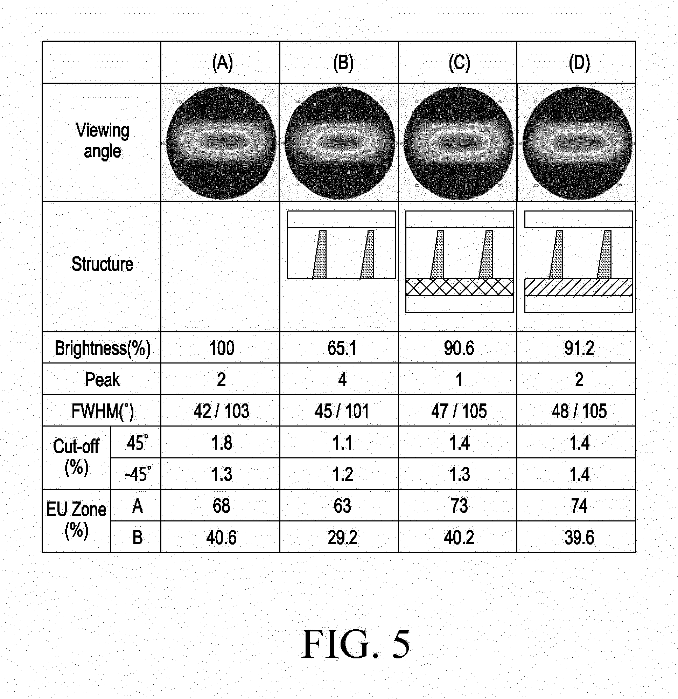

FIG. 5 is a table comparing the characteristics of a light control film including a louver film and a reflective polarizing film according to an embodiment of the present invention and a conventional light control film. As prior arts, a first comparative example (A) shows the optical properties of a display device without a light control film and a second comparative example (B) shows the optical properties of a display device including a louver film but not including a light control film. The brightness of the second comparative example (B) was 65.1% of that of the first comparative example (A), and thus it is difficult to use.

A first embodiment (C) and a second embodiment (D) disclose optical properties of a display device including the light control film 400 of the present invention. The first embodiment (C) and the second embodiment (D) may include the same louver film 410 and reflective polarizing films 420 with different values. For example, the thickness and/or refractive index of the reflective polarizing film 420 of the first embodiment (C) and the reflective polarizing film 420 of the second embodiment (D) may be different. Referring to the first embodiment (C) and the second embodiment (D), due to the reflective polarizing film (e.g., the reflective polarizing film 420 in FIG. 2), the viewing angle of the light control film 400 may be increased and the brightness may also be increased.

Referring to the first embodiment (C) according to the present invention, the brightness may be 90.6% of the brightness of the first comparative example (A). The viewing angle at full width at half maximum (FWHM) may be approximately 47°/105°. A peak value may be 1. The transmittance for the cut-off viewing angle based on +45° may be approximately 1.4%. The transmittance for the cut-off viewing angle based on -45° may be approximately 1.3%. The confirmed values based on EU Zone standards may be approximately 73% and 40.2%. It can be seen that the brightness of the first embodiment (C) and the value confirmed by the EU Zone standard are higher than the brightness and the value confirmed by the EU Zone standard of the second comparative example (B) which is without a reflective polarizing film.

Referring to the second example (D) according to the present invention, the brightness may be 91.2% of the brightness of the first comparative example (A). A peak value may be 2. The viewing angle at full width at half maximum (FWHM) may be approximately 48°/105°. The transmittance for the cut-off viewing angle based on +45° may be approximately 1.4%. The transmittance for the cut-off viewing angle based on -45° may be approximately 1.4%. The confirmed values based on EU Zone standards may be approximately 74% and 39.6%. It can be seen that the brightness of the second embodiment (D) and the value confirmed by the EU Zone standard are higher than the brightness and the value confirmed by the EU Zone standard of the second comparative example (B) which is without a reflective polarizing film.

In sum, due to the difference between the refractive index of the transmission layer and the light absorption pattern, the total reflection efficiency of the louver film can be increased. By forming the first side and the second side asymmetrically with respect to each other, the total reflection efficiency of the louver film can be increased in the present invention. The light control film of the various embodiments of the present invention described above is not limited to the above-described embodiments and drawings, and various substitutions, modifications, and changes are possible within the technical scope of the present disclosure. It will be clear to a person with ordinary knowledge. Moreover, the problems to be solved by the present specification are not limited to the above-mentioned problems and may be expanded in various ways without departing from the spirit and scope of the present invention. Furthermore, the effects that can be obtained from the present invention are not limited to the effects mentioned above, and other effects not mentioned can be clearly understood by those skilled in the art from the specification.

## Claims

1. A light control film(400) comprising:
a louver film(410) including a plurality of light absorption patterns arranged in parallel and a light transmitting portion surrounding at least a portion of the plurality of light absorption patterns;
a reflective polarizing film(420) adjusting an angle of a light transmitted to the louver film; and
a first adhesive layer(43 1) disposed between the louver film and the reflective polarizing film,
wherein a difference between a first refractive index of the light transmitting portion and a second refractive index of the plurality of light absorption patterns is 0.05 or more, and
wherein the plurality of light absorption patterns(411) include a first side(411a) and a second side(411b) formed asymmetrically with each other.

2. The light control film of claim 1, wherein the first side is inclined by a first angle with respect to the reflective polarizing film and the second side is substantially perpendicular to the reflective polarizing film.

3. The light control film of claim 2, wherein the first angle is 3.5° to 5°.

4. The light control film according to any one of of claims 1 to 3, wherein the reflective polarizing film is configured to transmit the light in a specified angle range and reflect the light exceeding the specified angle.

5. The light control film according to any one of claims 1 to 4, wherein the plurality of light absorption patterns are arranged along a first direction(Y direction), and
wherein the reflective polarizing film includes a transmission axis formed along the first direction(Y direction).

6. The light control film according to any one of claims 1 to 5, further comprising:
a first base film(441) disposed on the louver film; and
a matte layer(450) including a plurality of protrusions disposed on the first base film.

7. The light control film of claim 6, wherein at least some of the plurality of protrusions are
formed in an irregular shape with a curved surface.

8. The light control film of claim 6, wherein the plurality of light absorption patterns include a lower surface(411c) facing the first adhesive layer and an upper surface(411d) facing opposite to the lower surface and
wherein the upper surface is spaced apart from the first base film.

9. The light control film according to any one of claims 1 to 8, further comprising:
a second base film(442) disposed below the reflective polarizing film; and
a second adhesive layer being disposed between the reflective polarizing film and the second base film.

10. The light control film of claim 9 further comprising a coating layer(460) disposed below the second base film.

11. The light control film according to any one of claims 1 to 10, wherein a third refractive index of the reflective polarizing film is different from a fourth refractive index of the first adhesive layer.

12. The light control film according to any one of claims 1 to 11, wherein the first adhesive layer is attached to the lower surface(411c) of the plurality of light absorption patterns and a back surface(410b) of the transmission layer.

13. A backlight unit(10) comprising:
a light source(11a);
a light control film(400) according to any one of claims 1 to 12; and
a light guide plate(19a) for transmitting a light incident from the light source to the light control film.

14. A display device(1) comprising:
a liquid crystal panel(20); and
a back light unit(10) of claim 13.
